# EUROPEAN PATENT APPLICATION

(11) **EP 4 611 498 A1**
(43) Date of publication of application: **03.09.2025**
(21) Application number: 23882587.1
(22) Date of filing: 23.10.2023
(51) Int. Cl.: H05K 9/00, H01B 7/00, H01F 17/06, H01F 27/06, H01F 27/26, H01F 27/30, H02G 3/04

(54) **NOISE-ABSORBING-MEMBER-FIXING STRUCTURE, AND WIRE HARNESS**

(30) Priority: 26.10.2022 JP 2022171690
(71) Applicant: Furukawa Electric Co., Ltd., Chiyoda-ku Tokyo 100-8322 (JP); Furukawa Automotive Systems Inc., Inukami-gun, Shiga 522-0242 (JP)
(72) Inventor: SOUTEI Kouji, Inukami-gun, Shiga 522-0242 (JP)
(74) Representative: HKW Intellectual Property PartG mbB
(86) International application number: PCT/JP2023/038198
(87) International publication number: WO 2024/090382

(57) **Abstract**

The object is to provide a noise absorbing member securing structure capable of securing a noise absorbing member 3 to a desired position in a front-rear direction X and also to provide a wire harness 1. The noise absorbing member securing structure secures the ring-shaped noise absorbing member 3, including an insertion space 3a allowing an electric cable 2 to be inserted therethrough and suppressing noise in the electric cable 2 inserted through the insertion space 3a, to the electric cable 2. The noise absorbing member securing structure includes a securing portion 4 secured to a predetermined position in the electric cable 2 in the front-rear direction X; and a cable tie 5 attaching the noise absorbing member 3 to the securing portion 4.

## Description

### TECHNICAL FIELD

The present invention relates to a noise absorbing member securing structure that secures a noise absorbing member that, for example, suppresses propagation of a noise electric current generated in a power source or an electric device or suppresses radiation of electromagnetic noise generated in an electric cable, to a predetermined position in the electric cable, and also relates to a wire harness.

### BACKGROUND ART

In a vehicle such as an automobile or the like, a power source and an electric device are electrically connected with each other, or electric devices are also electrically connected with each other, by use of a wire harness including a bundle of a plurality of electric cables. Such a wire harness includes a noise absorbing member such as a ferrite core or the like in order to suppress propagation of a noise electric current generated in the power source or the electric device(s) or to suppress radiation of electromagnetic noise generated in such an electric cable (see Patent Literature 1).

In Patent Literature 1, for securing the noise absorbing member to the electric cable, a braided shield covering the noise absorbing member outserted over the electric cable is pressed to the electric cable to decrease the diameter thereof. In this manner, the noise absorbing member is positionally restricted in a longitudinal direction of the electric cable.

However, in Patent Literature 1, if an external force acts to move the noise absorbing member in the longitudinal direction of the electric cable in the state where the noise absorbing member is positionally restricted by the braided shield, the braided shield may undesirably be forcibly pressed and spread by the noise absorbing member.

In such a case, Patent Literature 1 has a problem that at the time of, for example, winding of a fixing tape, the noise absorbing member is released from the positionally restricted state and as a result, cannot be secured to a desired position in the longitudinal direction.

### CITATION LIST

### PATENT LITERATURE

Patent Literature 1: JP 2015-198041

### SUMMARY OF INVENTION

### TECHNICAL PROBLEM

In light of the above-described problem, the present invention has an object of providing a noise absorbing member securing structure capable of securing a noise absorbing member to a desired position in a longitudinal direction and also providing a wire harness.

### SOLUTION TO PROBLEM

The present invention is directed to a noise absorbing member securing structure securing a ring-shaped noise absorbing member, including an insertion space allowing an electric cable to be inserted therethrough and suppressing noise in the electric cable inserted through the insertion space, to the electric cable. The noise absorbing member securing structure includes a securing portion secured to a predetermined position in the electric cable in a longitudinal direction; and an attachment portion attaching the noise absorbing member to the securing portion.

The present invention is also directed to a wire harness including a plurality of electric cables, a ring-shaped noise absorbing member including an insertion space allowing the plurality of electric cables to be inserted therethrough and suppressing noise in the electric cables inserted through the insertion space, a securing portion secured to a predetermined position in the electric cables in a longitudinal direction, and an attachment portion attaching the noise absorbing member to the securing portion. The noise absorbing member is secured to the predetermined position in the electric cables in the longitudinal direction by a cooperation of the securing portion and the attachment portion.

The noise mentioned above refers to a noise electric current flowing in the electric cable or/and electromagnetic noise generated in the electric cable.

The securing portion mentioned above refers to a fixing tape or a cable tie secured to the electric cable, a grasping member grasped by, and secured to, the electric cable, an engaging member to which the noise absorbing member is to be engaged, or the like.

The attachment portion mentioned above refers to a cable tie or a band-shaped tightening member to be wound around the noise absorbing member and the securing portion, or an engaged portion that is provided on the noise absorbing member and is to be engaged with an engaging member, which is the securing portion.

According to the present invention, the securing portion, to which the noise absorbing member is to be attached via the attachment portion, is secured to a predetermined position in the electric cables. Therefore, the securing portion is not shifted in the longitudinal direction with respect to the electric cables. Thus, with the noise absorbing member securing structure, the noise absorbing member merely need to be attached to the securing portion via the attachment portion to be secured to the electric cables.

At this point, the noise absorbing member securing structure may cause the securing portion to act as a positioning portion that positions the noise absorbing member in the longitudinal direction with respect to the electric cables.

With this configuration, the noise absorbing member securing structure may secure the noise absorbing member to the electric cables more efficiently and more easily as compared with in the case where a braided shield is used to secure the noise absorbing member to the electric cables while the noise absorbing member is positioned.

Therefore, the noise absorbing member securing structure and the wire harness, to which the noise absorbing member securing structure is applied, allow the noise absorbing member, which is desired to be located at an accurate position in the longitudinal direction in order to suppress the noise in the electric cables, to be secured to such a desired position in the longitudinal direction.

In an embodiment of the present invention, the attachment portion may have such a lengthy shape as to pass between the electric cable and the securing portion and to be wound around an outer circumferential surface of the noise absorbing member in the longitudinal direction.

With this configuration, the attachment portion has such a lengthy shape as to be wound around the outer circumferential surface of the noise absorbing member in the longitudinal direction. Therefore, the noise absorbing member may be secured to the electric cables with a simple configuration.

Furthermore, the attachment portion passing between the electric cable and the securing portion is wound around the outer circumferential surface of the noise absorbing member. Therefore, the noise absorbing member securing structure allows the entirety of the noise absorbing member in the longitudinal direction to be attached to the securing portion with the attachment portion. Thus, the noise absorbing member securing structure may secure the noise absorbing member to the electric cable more stably.

In an embodiment of the present invention, the securing portion may be a fixing tape wound around the electric cable at the predetermined position in the electric cable in the longitudinal direction.

With this configuration, the securing portion may be formed easily, and the weight of the securing portion may be significantly suppressed as compared with the case of a securing portion formed of a metal material or a resin material.

Furthermore, the securing portion is formed of the fixing tape. Therefore, the noise absorbing member securing structure may secure the securing portion to a desired predetermined position in the longitudinal direction with certainty.

In addition, the range in the longitudinal direction in which the fixing tape is to be wound is changed in accordance with the length of the noise absorbing member in the longitudinal direction. In this manner, the noise absorbing member securing structure allows the securing portion, having a length in the longitudinal direction suitable to the attachment of the noise absorbing member via the attachment portion, to be formed.

With this configuration, the noise absorbing member securing structure may secure the noise absorbing member to the electric cables more stably.

In an embodiment of the present invention, the securing portion may hold a plurality of the electric cables in a bundled state, and the attachment portion may have such a lengthy shape as to pass through a gap defined by the plurality of electric cables and the securing portion and to be wound around an outer circumferential surface of the noise absorbing member.

With this configuration, the attachment portion has such a lengthy shape as to be wound around the outer circumferential surface of the noise absorbing member in the longitudinal direction. Therefore, the noise absorbing member may be secured to the electric cables with a simple configuration.

Furthermore, the attachment portion passes through the gap defined by the plurality of electric cables and the securing portion. Therefore, the noise absorbing member securing structure may make a good use of the gap defined by the plurality of electric cables and the securing portion to wind the attachment portion.

Therefore, the noise absorbing member securing structure allows the attachment portion to be attached to the securing portion easily, and allows the securing portion to be more compact than a securing portion including an insertion portion through which the attachment portion is to be inserted.

In an embodiment of the present invention, the attachment portion may be a cable tie including a lengthy band-shaped band portion and a lock portion in engagement with, and securing, the band portion wound annularly.

With this configuration, the noise absorbing member may be attached to the securing portion by use of a tightening force of putting the band portion of the cable tie included in the attachment portion into engagement with the lock portion.

At this point, the noise absorbing member securing structure may restrict the noise absorbing member to be at a desired predetermined position by tightening the cable tie.

With this configuration, the noise absorbing member securing structure allows the noise absorbing member to be positionally aligned easily with respect to the securing portion. Therefore, the ease of assembly of the noise absorbing member may be improved.

In an embodiment of the present invention, the noise absorbing member may include a plurality of ring-shaped bodies located side by side in the longitudinal direction, and the securing portion may have a length in the longitudinal direction that is equal to, or slightly shorter than, that of the noise absorbing member in the longitudinal direction.

The length that is slightly shorter than that of the noise absorbing member in the longitudinal direction refers to, for example, a length shorter than that of the noise absorbing member within a range of the tolerance.

With this configuration, the noise absorbing member may be secured to a desired position in the longitudinal direction with certainty, and the abnormal noise generated by the contact of the ring-shaped bodies included in the noise absorbing member may be prevented.

This will be described specifically. The lengthy attachment portion is wound in a generally trapezoidal shape with the side thereof closer to the securing portion being longer than the side opposite thereto. As the difference by which the length of the securing portion is longer than the length of the noise absorbing member is larger, the difference between the longer side and the shorter side of the trapezoidal shape is larger.

Therefore, the load at which the plurality of ring-shaped bodies included in the noise absorbing member are put into close contact with each other in the longitudinal direction is decreased. As a result, when an external force such as a vibration or the like acts on the electric cable, the ring-shaped bodies adjacent to each other may contact each other and be separated from each other repeatedly, which may undesirably generate abnormal noise.

By contrast, in this embodiment, the length of the securing portion is equal to, or slightly shorter than, the length of the noise absorbing member. Therefore, the attachment portion may be wound so as to becomes closer to, or to contact, the end surfaces and the outer circumferential surface of the noise absorbing member.

With this configuration, the noise absorbing member securing structure may restrict, by the attachment portion, the movement of the noise absorbing member in the longitudinal direction with certainty, and may prevent the ring-shaped bodies included in the noise absorbing member from moving with respect to each other in the longitudinal direction.

Therefore, the noise absorbing member securing structure may secure the noise absorbing member to a desired position in the longitudinal direction with certainty, and may prevent the abnormal noise from being generated by the contact of the ring-shaped bodies included in the noise absorbing member.

In an embodiment of the present invention, the noise absorbing member may include a plurality of ring-shaped bodies located side by side in the longitudinal direction, and the securing portion may have a length in the longitudinal direction that is equal to, or slightly longer than, that of the noise absorbing member in the longitudinal direction.

The length that is slightly longer than that of the noise absorbing member in the longitudinal direction refers to, for example, a length longer than that of the noise absorbing member within a range of the tolerance.

With this configuration, the noise absorbing member may be secured to a desired position in the longitudinal direction with certainty, and the abnormal noise generated by the contact of the ring-shaped bodies included in the noise absorbing member may be prevented.

Specifically, as the difference by which the length of the securing portion is shorter than the length of the noise absorbing member is larger, the positions of the ring-shaped bodies with respect to the securing portion may undesirably become more unstable.

For example, at the time of tightening of the lengthy attachment portion, the ring-shaped bodies may undesirably be tilted such that the inner circumferential surfaces thereof cross the longitudinal direction.

By contrast, in this embodiment, the length of the securing portion is equal to, or slightly longer than, the length of the noise absorbing member. Therefore, the attachment portion of the noise absorbing member securing structure does not contact an edge of the ring-shaped bodies on the side of the inner circumferential surfaces thereof.

Therefore, the noise absorbing member securing structure allows the attachment portion to be tightened more easily, and may suppress the tilting of the ring-shaped bodies at the time of the tightening of the attachment portion.

Furthermore, the noise absorbing member securing structure may cause the attachment portion to be wound such that the attachment portion becomes closer to, or to contact, the end surfaces and the outer circumferential surface of the noise absorbing member.

With this configuration, the noise absorbing member securing structure may prevent the ring-shaped bodies included in the noise absorbing member from moving with respect to each other in the longitudinal direction, and may prevent the ring-shaped bodies from tilting such that the inner circumferential surfaces thereof cross the longitudinal direction.

Therefore, the noise absorbing member securing structure may secure the noise absorbing member to a desired position in the longitudinal direction with certainty, and may prevent the abnormal noise from being generated by the contact of the ring-shaped bodies included in the noise absorbing member.

In an embodiment of the present invention, the lock portion of the cable tie may be located adjacent to an end surface of the noise absorbing member in the longitudinal direction of the electric cable, and the band portion of the cable tie may be inserted through, and secured to, the lock portion on the side of an inner circumferential surface of the noise absorbing member with respect to a base portion of the band portion.

With this configuration, the lock portion is adjacent to the end surface of the noise absorbing member. Therefore, an increase in the external shape of the noise absorbing member securing structure may be suppressed as compared with in the case where the lock portion is located on the outer circumferential surface of the noise absorbing member. Therefore, the noise absorbing member securing structure allows the gap to be formed by the noise absorbing member and peripheral components easily.

Furthermore, the band portion of the cable tie is inserted through, and secured to, the lock portion on the side of the inner circumferential surface of the noise absorbing member with respect to the base portion of the band portion. Therefore, with the noise absorbing member securing structure, when the band portion is put into engagement with the lock portion, the band portion is pulled generally parallel to the longitudinal direction of the electric cables.

With this configuration, the noise absorbing member securing structure may prevent the ring-shaped bodies from tilting such that the inner circumferential surfaces thereof cross the longitudinal direction of the electric cables, and allows the ring-shaped bodies to contact each other in the longitudinal direction with certainty.

In an embodiment of the present invention, the noise absorbing member may include a plurality of ring-shaped bodies located side by side in the longitudinal direction.

With this configuration, the noise absorbing member includes the plurality of ring-shaped bodies. Therefore, the noise absorbing member may be prevented from becoming larger, and provision of noise absorption capability is guaranteed. Thus, the noise absorbing member securing structure allows the gap to be formed by the noise absorbing member and the peripheral components easily.

### ADVANTAGEOUS EFFECTS OF INVENTION

The present invention provides a noise absorbing member securing structure capable of securing a noise absorbing member to a desired position in a longitudinal direction and also provides a wire harness.

### BRIEF DESCRIPTION OF DRAWINGS

FIG. 1 is a front view of a wire harness including a noise absorbing member securing structure.
FIG. 2 shows schematic views of the wire harness.
FIG. 3 is a plan view showing an external appearance of the wire harness, with a noise absorbing member being shown in a cross-sectional view taken along line A-A in FIG. 1.
FIG. 4 is an enlarged cross-sectional view of an important portion taken along line B-B in FIG. 1.
FIG. 5 illustrates the length of a securing portion in a front-rear direction.
FIG. 6 illustrates a process of securing the noise absorbing member.
FIG. 7 is a plan view showing a state where a bank portion of a cable tie is inserted through a lock portion.
FIG. 8 illustrates secured states of securing portions having different lengths from each other.

### DESCRIPTION OF EMBODIMENTS

An embodiment of the present invention will be described with reference to the drawings.

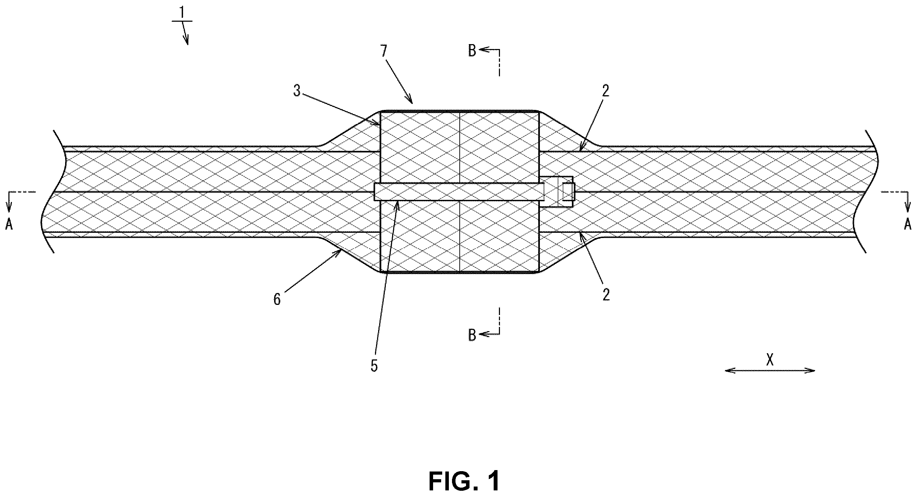

In this embodiment, a securing structure that secures a noise absorbing member 3, suppressing propagation of a noise electric current generated in a power source or an electric device or suppressing radiation of electromagnetic noise generated in an electric cable 2, to a predetermined position in the electric cable 2 in a longitudinal direction will be described with reference to FIG. 1 through FIG. 5.

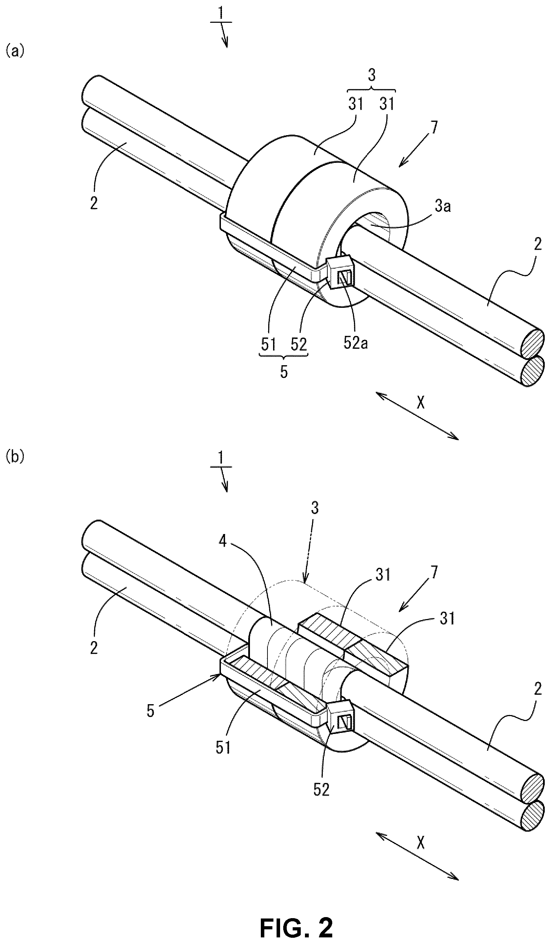

FIG. 1 is a front view of a wire harness 1 including the noise absorbing member 3. FIG. 2 shows schematic views of the wire harness 1. FIG. 2(a) is an external perspective view of the wire harness 1 including the noise absorbing member 3, and FIG. 2(b) is an external perspective view of the wire harness 1, with a top portion of the noise absorbing member 3 being shown as being transparent.

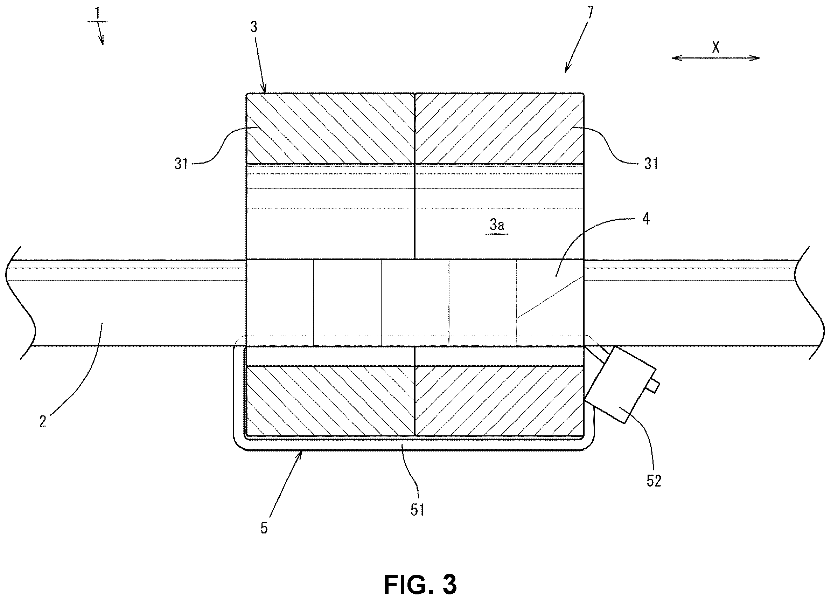

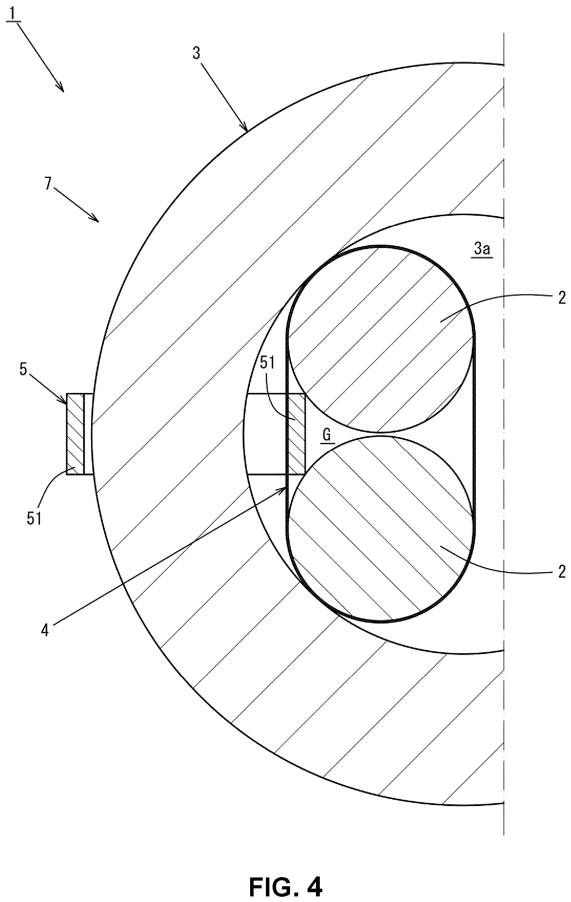

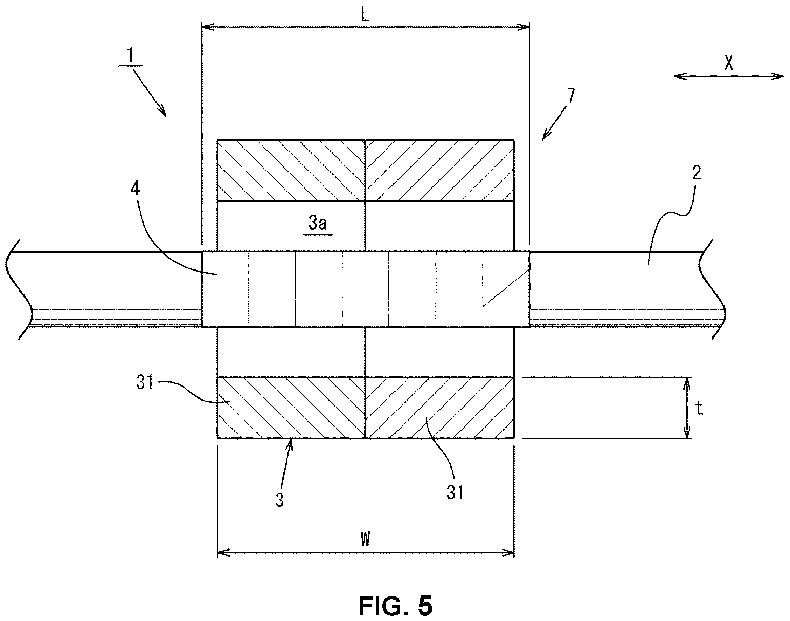

FIG. 3 is a plan view of the wire harness 1, with the noise absorbing member 3 being shown in a cross-sectional view taken along line A-A in FIG. 1. FIG. 4 is an enlarged cross-sectional view of an important portion taken along line B-B in FIG. 1. FIG. 5 illustrates the length of a securing portion 4 in a front-rear direction X.

In FIG. 1, the top side corresponds to the top side of the wire harness 1. In FIG. 1, "X" represents the front-rear direction of the wire harness 1 (hereinafter, referred to as the "front-rear direction X").

For clear illustration, FIG. 2 through FIG. 5 omit a braided shield 6.

In this embodiment, as shown in FIG. 1 and FIG. 2, the wire harness 1 includes two electric cables 2 having a longitudinal direction extending in the front-rear direction X, the noise absorbing member 3 allowing the two electric cables 2 to be inserted therethrough, a securing portion 4 and a cable tie 5 securing the noise absorbing member 3 to the two electric cables 2, and a braided shield 6 integrally covering these components.

Although not shown in detail, one of two ends of the wire harness 1 in the front-rear direction X is connected with an electric device via a connector, and the other end thereof is connected with a power source or an electric device via a connector.

In more detail, the two electric cables 2 of the wire harness 1 each include a conductor (not shown) having conductivity and an insulating cover (not shown) that is insulating and covers the conductor. These two electric cables 2 are bundled by the securing portion 4 described below and are restricted from moving in the front-rear direction X.

The noise absorbing member 3 of the wire harness 1 has a function of suppressing a noise electric current flowing in the electric cables 2 or/and radiation of electromagnetic noise generated in the electric cables 2. As shown in FIG. 2 through FIG. 4, the noise absorbing member 3 includes an insertion space 3a, through which at least two electric cables 2 may be inserted as seen in the front-rear direction X. The noise absorbing member 3 has a hollow cylindrical shape extending in the front-rear direction X.

As shown in FIG. 3 and FIG. 4, the insertion space 3a of the noise absorbing member 3 has an inner circumferential surface having a diameter longer than an outer diameter of the bundle of the two electric cables 2, and has such a size as to allow, for example, three electric cables 2 to be inserted therethrough.

The noise absorbing member 3 having such a configuration is secured, by use of the securing portion 4 and the cable tie 5 described below, to the predetermined position, in the front-rear direction X, in the two electric cables 2 bundled together so as be immovable with respect to each other. In this state, as shown in FIG. 3 and 4, the noise absorbing member 3 is located such that the center thereof in a diametrical direction of the inner circumferential surface thereof is offset with respect to the two electric cables 2, and the inner circumferential surface thereof is in contact with the two electric cables 2.

In more detail, as shown in FIG. 2 and FIG. 3, the noise absorbing member 3 includes two core members 31 located side by side in the front-rear direction X. The two core members 31 are each formed of, for example, a ferrite magnetic body having soft magnetism, and each have a hollow cylindrical shape. The hollow cylindrical shapes of the core members 31 are the same as each other in the inner diameter, the outer diameter and the length in the front-rear direction X.

The securing portion 4 of the wire harness 1 is formed of a fixing tape wound around the two electric cables 2 at the predetermined position in the front-rear direction X in order to bundle the two electric cables 2. Therefore, the securing portion 4 is positionally secured to the two bundled electric cables 2 at least in the front-rear direction X.

As shown in FIG. 4, the securing portion 4 and the two electric cables 2 bundled together by the fixing tape define a gap G, which is generally triangular as seen in the front view.

The fixing tape that forms the securing portion 4 is wound such that the length thereof in the front-rear direction X is generally equal to the length of the noise absorbing member 3 in the front-rear direction X.

Specifically, the fixing tape that forms the securing portion 4 is wound in a range of length in the front-rear direction X that is equal to the length of the noise absorbing member 3 in the front-rear direction X or is the sum of the length of the noise absorbing member 3 in the front-rear direction X and a tolerance.

The "tolerance" mentioned above is set based on, as shown in FIG. 5, a thickness t of the noise absorbing member 3, which is, for example, the difference between an outer diameter and an inner diameter of the noise absorbing member 3. Herein, the tolerance is ±t/2.

Therefore, referring to FIG. 5, where the length of the noise absorbing member 3 in the front-rear direction X is W, the fixing tape of the securing portion 4 is wound such that the length L thereof in the front-rear direction X is (W - t/2) ≤ L ≤ (W + t/2).

The cable tie 5 of the wire harness 1 is an attachment member that attaches the noise absorbing member 3 to the securing portion 4, and is wound around the noise absorbing member 3 annularly in the front-rear direction X.

As shown in FIG. 3, the cable tie 5 includes a generally band-shaped band portion 51 having serration provided on one main surface thereof and a lock portion 52 continuous from one of two ends of the band portion 51 in the longitudinal direction. The other end of the two ends of the band portion 51 in the longitudinal direction is pulled by the lock portion 52 to be engaged with, and secured to, the lock portion 52. The band portion 51 and the lock portion 52 are integrally formed with each other.

In more detail, the lock portion 52 is generally box-shaped and is wider than the band portion 51. The lock portion 52 includes an insertion hole 52a (see FIG. 2(a)) allowing the band portion 51 to be inserted therethrough. The insertion hole 52a is opened in a direction perpendicular to the direction in which the band portion 51 is provided continuously from the lock portion 52.

The insertion hole 52a of the lock portion 52 has a claw (not shown) directed inward. The claw is to be engaged with the serration of the band portion 51 inserted through the insertion opening 52a from one side in the perpendicular direction.

As shown in FIG. 2 and FIG. 3, the cable tie 5 having such a configuration is wound around the noise absorbing member 3 such that the lock portion 52 is adjacent to the noise absorbing member 3 in the front-rear direction X. The lock portion 52 is located such that in this state, the insertion hole 52a is located inner in the diametrical direction of the noise absorbing member 3 with respect to a base portion of the band portion 51.

As shown in FIG. 3 and FIG. 4, the band portion 51 of the cable tie 5 is wound in the front-rear direction X from the outer circumferential surface of the noise absorbing member 3 toward the insertion space 3a, and passes through the gap G defined by the two electric cables 2 and the securing portion 4 to be inserted through the insertion hole 52a of the lock portion 52.

As shown in FIG. 1, the braided shield 6 of the wire harness 1 is a cylindrical braided tube including a plurality of metal wires braided in a mesh manner. The braided shield 6 is secured to the two electric cables 2 by use of an appropriate member such as an adhesive tape, a cable tie or the like.

The braided shield 6 has a cylindrical shape having an inner diameter generally equal to the outer diameter of the noise absorbing member 3, and a portion thereof covering the electric cables 2 is crushed so as to be in close contact with the electric cables 2.

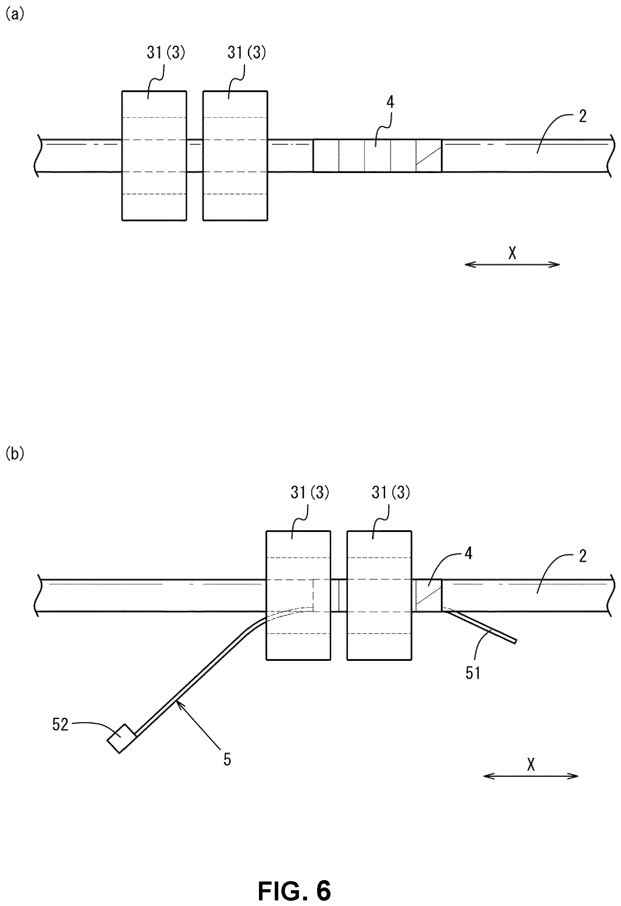

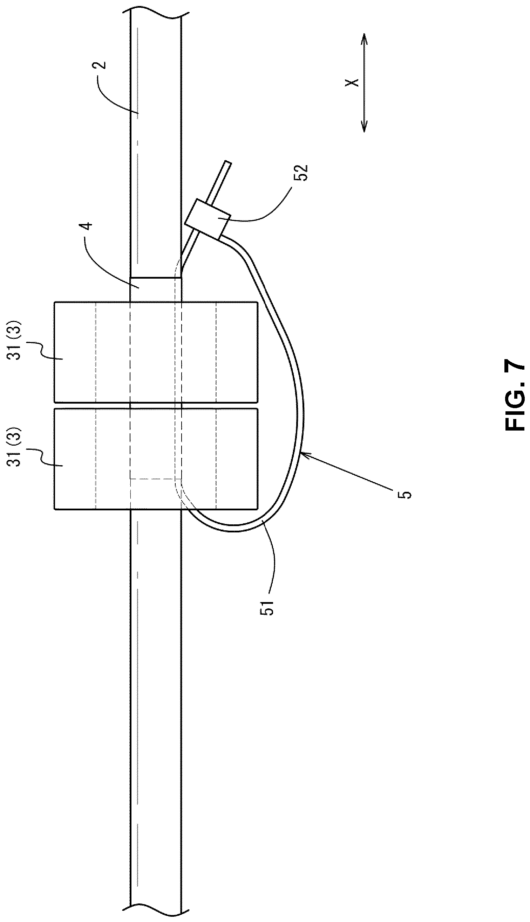

Now, with reference to FIG. 6 and FIG. 7, an example of securing process of securing the noise absorbing member 3 to the two electric cables 2 in the wire harness 1 having the above-described configuration will be described.

FIG. 6 illustrates the securing process of the noise absorbing member 3.

Specifically, FIG. 6(a) is a plan view of a state where the securing portion 4 is secured to the two electric cables 2, and FIG. 6(b) is a plan view of a state where the cable tie 5 is inserted through the gap G defined by the securing portion 4 and the electric cables 2.

FIG. 7 is a plan view of a state where the band portion 51 of the cable tie 5 is inserted through the lock portion 52.

First, as shown in FIG. 6(a), an operator or an assembly device winds the fixing tape around, and bundle, the two electric cables 2 such that at a desired predetermined position in the front-rear direction X, the length L in the front-rear direction X is (W - t/2) ≤ L ≤ (W + t/2). The wound fixing tape acts as the securing portion 4.

Then, the operator or the assembly device inserts the two electric cables 2 bundled by the securing portion 4 through the two core members 31.

Then, as shown in FIG. 6(b), the operator or the assembly device inserts the band portion 51 of the cable tie 5 from one side in the front-rear direction X through the inner space of the two core members 31 and through the gap G defined by the securing portion 4 and the two electric cables 2, and then draws a tip of the band portion 51 out from the other side in the front-rear direction X.

As shown in FIG. 7, after inserting the band portion 51 of the cable tie 51 through the gap G defined by the securing portion 4 and the two electric cables 2, the operator or the assembly device curves a portion of the band portion 51 closer to the lock portion 52 toward the other side in the front-rear direction X and inserts the tip of the band portion 51 through the insertion hole 52a of the lock portion 52.

Then, the operator or the assembly device pulls the tip of the band portion 51 protruding from the insertion hole 52a to move the noise absorbing member 3 to the desired predetermined position while putting the band portion 51 into engagement with the lock portion 52 to secure the band portion 51 to the lock portion 52.

During this process, when the band portion 51 is put into engagement with the lock portion 52, end surfaces of the two core members 31 in the front-rear direction X contact each other, so that the two core members 31 act as the noise absorbing member 3. The inner circumferential surfaces of the two core members 31 contact the securing portion 4 (see FIG. 3).

The interval between portions of the band portion 51 of the cable tie 5 facing each other in the front-rear direction X is generally equal to the length L of the securing portion 4 in the front-rear direction X. Therefore, the noise absorbing member 3 is restricted from moving in the front-rear direction X.

In addition, the inner circumferential surface of the noise absorbing member 3 contacts the securing portion 4. Therefore, the noise absorbing member 3 is restricted from moving in the diametrical direction thereof.

In this manner, the noise absorbing member 3 is secured to a predetermined position in the two electric cables 2 in the front-rear direction X.

After securing the noise absorbing member 3 to the electric cables 2 by use of the cable tie 5, the operator or the assembly device covers the noise absorbing member 3 with the braided shield 6 outserted over the electric cables 2 in advance, and decreases the diameter of a portion of the braided shield 6 covering the two electric cables 2 to put the braided shield into close contact with the electric cables 2.

Then, the operator or the assembly device secures the braided shield 6 to the two electric cables 2 by use of an appropriate member such as an adhesive tape, a cable tie of the like. Thus, the wire harness 1 including the noise absorbing member 3 is produced.

The wire harness 1 having such a configuration includes a noise absorbing member securing structure 7. The noise absorbing member securing structure 7 in this embodiment is a securing structure that secures the ring-shaped noise absorbing member 3, including the insertion space 3a allowing the electric cables 2 to be inserted therethrough and suppressing the noise in the electric cables 2 inserted through the insertion space 3a, to the electric cables 2.

The noise absorbing member securing structure 7 includes the securing portion 4 secured to a predetermined position in the electric cables 2 in the front-rear direction X, and the attachment portion (cable tie 5) attaching the noise absorbing member 3 to the securing portion 4.

The wire harness 1 in this embodiment includes the plurality of electric cables 2, the ring-shaped noise absorbing member 3 including the insertion space 3a allowing the plurality of electric cables 2 to be inserted therethrough and suppressing the noise in the electric cables 2 inserted through the insertion space 3a, the securing portion 4 described above and the attachment portion (cable tie 5) described above.

The noise absorbing member 3 of the wire harness 1 is secured to a predetermined position in the electric cables 2 in the front-rear direction X by a cooperation of the securing portion 4 and the attachment portion (cable tie 5).

With this configuration, the securing portion 4, to which the noise absorbing member 3 is to be attached via the cable tie 5, is secured to a predetermined position in the electric cables 2. Therefore, the securing portion 4 is not shifted in the front-rear direction X with respect to the electric cables 2. Thus, with the noise absorbing member securing structure 7, the noise absorbing member 3 merely need to be attached to the securing portion 4 via the cable tie 5 to be secured to the electric cables 2.

At this point, the noise absorbing member securing structure 7 may cause the securing portion 4 to act as a positioning portion that positions the noise absorbing member 3 in the front-rear direction X with respect to the electric cables 2.

With this configuration, the noise absorbing member securing structure 7 may secure the noise absorbing member 3 to the electric cables 2 more efficiently and more easily as compared with in the case where a braided shield is used to secure the noise absorbing member 3 to the electric cables 2 while the noise absorbing member 3 is positioned.

Therefore, the noise absorbing member securing structure 7 and the wire harness 1, to which the noise absorbing member securing structure 7 is applied, allow the noise absorbing member 3, which is desired to be located at an accurate position in the front-rear direction X in order to suppress the noise in the electric cables 2, to be secured to such a desired position in the front-rear direction X.

The securing portion 4 holds the plurality of electric cables 2 in a bundled state. The band portion 51 of the cable tie 5 has such a lengthy shape as to pass through the gap G defined by the plurality of electric cables 2 and the securing portion 4 and to be wound around the outer circumferential surface of the noise absorbing member 3.

With this configuration, the band portion 51 of the cable tie 5 has such a lengthy shape as to be wound around the outer circumferential surface of the noise absorbing member 3 in the front-rear direction X. Therefore, the noise absorbing member 3 may be secured to the electric cables 2 with a simple configuration.

Furthermore, the band portion 51 of the cable tie 5 passes through the gap G defined by the plurality of electric cables 2 and the securing portion 4. Therefore, the noise absorbing member securing structure 7 may make a good use of the gap G defined by the plurality of electric cables 2 and the securing portion 4 to wind the band portion 51.

Therefore, the noise absorbing member securing structure 7 allows the cable tie 5 to be attached to the securing portion 4 easily, and allows the securing portion 4 to be more compact than a securing portion including an insertion portion through which the cable die 5 is to be inserted.

The attachment portion includes the cable tie 5 including the lengthy band portion 51 and the lock portion 52 engaged with, and securing, the band portion 51 wound annularly. Therefore, the noise absorbing member securing structure 7 may attach the noise absorbing member 3 to the securing portion 4 by use of a tightening force of putting the band portion 51 into engagement with the lock portion 52.

At this point, the noise absorbing member securing structure 7 may restrict the noise absorbing member 3 to be at a desired predetermined position by tightening the cable tie 5.

With this configuration, the noise absorbing member securing structure 7 allows the noise absorbing member 3 to be positionally aligned easily with respect to the securing portion 4. Therefore, the ease of assembly of the noise absorbing member 3 may be improved.

The securing portion 4 is the fixing tape wound around the plurality of electric cables 2 at a predetermined position in the electric cables 2 in the front-rear direction X. Therefore, the noise absorbing member securing structure 7 allows the securing portion 4, which cooperates with the two electric cables 2 to define the gap G allowing the cable tie 5 to be inserted therethrough, to be formed easily. The noise absorbing member securing structure 7 also allows the weight of the securing portion 4 to be significantly suppressed as compared with the case of a securing portion formed of a metal material or a resin material.

Furthermore, the fixing tape forms the securing portion 4. Therefore, the noise absorbing member securing structure 7 may secure the securing portion 4 to a desired predetermined position in the front-rear direction X with certainty.

In addition, the range in the front-rear direction X in which the fixing tape is to be wound is changed in accordance with the length of the noise absorbing member 3 in the front-rear direction X. In this manner, the noise absorbing member securing structure 7 allows the securing portion 4, having a length in the front-rear direction X suitable to the attachment of the noise absorbing member 3 via the cable tie 5, to be formed.

With this configuration, the noise absorbing member securing structure 7 may secure the noise absorbing member 3 to the electric cables 2 more stably.

The noise absorbing member 3 includes the plurality of core members 31 located side by side in the front-rear direction X. The length L of the securing portion 4 is equal to, or longer than, a value obtained by subtracting 1/2 of t, which is the thickness of the noise absorbing member 3, from the length W of the noise absorbing member 3 and is equal to, or shorter than, the length W of the noise absorbing member 3.

With this configuration, the noise absorbing member 3 may be secured to a desired position in the front-rear direction X with certainty, and the abnormal noise generated by the contact of the core members 31 included in the noise absorbing member 3 may be prevented.

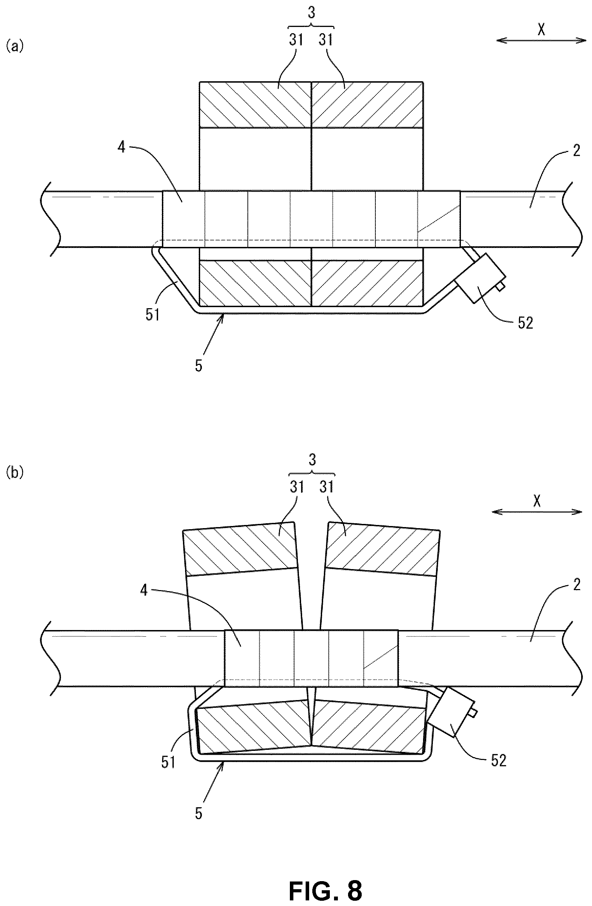

This will be described specifically. Referring to FIG. 8(a), the cable tie 5 is wound in a generally trapezoidal shape with the side thereof closer to the securing portion 4 being longer than the side opposite thereto. As the difference by which the length L of the securing portion 4 is longer than the length W of the noise absorbing member 3 is larger, the difference between the longer side and the shorter side of the trapezoidal shape is larger.

Therefore, the load at which the two core members 31 included in the noise absorbing member 3 are put into close contact with each other in the front-rear direction X is decreased. As a result, when an external force such as a vibration or the like acts on the wire harness 1, the two core members 31 may contact each other and be separated from each other repeatedly, which may undesirably generate abnormal noise.

By contrast, in this embodiment, the length L of the securing portion 4 is equal to, or slightly shorter than, the length W of the noise absorbing member 3. Therefore, the noise absorbing member securing structure 7 may cause the band portion 51 of the cable tie 5 to be wound such that the band portion 51 becomes closer to, or to contact, the end surfaces and the outer circumferential surface of the noise absorbing member 3.

With this configuration, the noise absorbing member securing structure 7 may restrict, by the band portion 51, the movement of the noise absorbing member 3 in the front-rear direction X with certainty, and may prevent the core members 31 included in the noise absorbing member 3 from moving with respect to each other in the front-rear direction X.

Therefore, the noise absorbing member securing structure 7 may secure the noise absorbing member 3 to a desired position in the front-rear direction X with certainty, and may prevent the abnormal noise from being generated by the contact of the core members 31 included in the noise absorbing member 3.

The noise absorbing member 3 includes the plurality of core members 31 located side by side in the front-rear direction X. The length L of the securing portion 4 is equal to, or longer than, the length W of the noise absorbing member 3, and is equal to, or shorter than, a value obtained by adding 1/2 of t, which is the thickness of the noise absorbing member 3, to the length W of the noise absorbing member 3.

With this configuration, the noise absorbing member 3 may be secured to a desired position in the front-rear direction X with certainty, and the abnormal noise generated by the contact of the core members 31 included in the noise absorbing member 3 may be prevented.

This will be described specifically. Referring to FIG. 8(b), as the difference by which the length L of the securing portion 4 is shorter than the length W of the noise absorbing member 3 is larger, the positions of the core members 31 with respect to the securing portion 4 may undesirably be become more unstable.

For example, at the time of tightening of the cable tie 5, the core members 31 may undesirably be tilted such that the inner circumferential surfaces thereof cross the front-rear direction X.

By contrast, in this embodiment, the length L of the securing portion 4 is equal to, or slightly longer than, the length W of the noise absorbing member 3. Therefore, the band portion 51 of the cable tie 5 of the noise absorbing member securing structure 7 does not contact an edge of the core members 31 on the side of the inner circumferential surfaces thereof.

Therefore, the noise absorbing member securing structure 7 allows the cable tie 5 to be tightened more easily, and may suppress the tilting of the core members 31 at the time of the tightening of the cable tie 5.

Furthermore, the noise absorbing member securing structure 7 may cause the band portion 51 of the cable tie 5 to be wound such that the band portion 51 becomes closer to, or to contact, the end surfaces and the outer circumferential surface of the noise absorbing member 3.

With this configuration, the noise absorbing member securing structure 7 may prevent the core members 31 included in the noise absorbing member 3 from moving with respect to each other in the front-rear direction X, and may prevent the core members 31 from tilting such that the inner circumferential surfaces thereof cross the front-rear direction X.

Therefore, the noise absorbing member securing structure 7 may secure the noise absorbing member 3 to a desired position in the front-rear direction X with certainty, and may prevent the abnormal noise from being generated by the contact of the core members 31 included in the noise absorbing member 3.

The lock portion 52 of the cable tie 5 is located adjacent to the end surface of the noise absorbing member 3 in the front-rear direction X of the electric cables 2. The band portion 51 of the cable tie 5 is inserted through, and secured to, the lock portion 52 on the side of the inner circumferential surface of the noise absorbing member 3 with respect to the base portion of the band portion 51.

With this configuration, the lock portion 52 is adjacent to the end surface of the noise absorbing member 3. Therefore, an increase in the external shape of the noise absorbing member securing structure 7 may be suppressed as compared with in the case where the lock portion 52 is located on the outer circumferential surface of the noise absorbing member 3. Therefore, the noise absorbing member securing structure 7 allows the gap G to be formed by the noise absorbing member 3 and peripheral components easily.

Furthermore, the band portion 51 of the cable tie 5 is inserted through, and secured to, the lock portion 52 on the side of the inner circumferential surface of the noise absorbing member 3 with respect to the base portion of the band portion 51. Therefore, with the noise absorbing member securing structure 7, when the band portion 51 is put into engagement with the lock portion 52, the band portion 51 is pulled generally parallel to the front-rear direction X.

With this configuration, the noise absorbing member securing structure 7 may prevent the core members 31 from tilting such that the inner circumferential surfaces thereof cross the front-rear direction X, and allows the core members 31 to contact each other in the front-rear direction X with certainty.

The noise absorbing member 3 includes the plurality of core members 31 located side by side in the front-rear direction X. Therefore, the noise absorbing member securing structure 7 may prevent the noise absorbing member 3 from becoming larger, and guarantees that noise absorption capability is provided with certainty. Thus, the noise absorbing member securing structure 7 allows the gap G to be formed by the noise absorbing member 3 and the peripheral components easily.

The longitudinal direction according to the present invention corresponds to the front-rear direction X in the above-described embodiment, and in a similar manner,
the attachment portion corresponds to the cable tie 5, and
the ring-shaped body corresponds to the core member 31.

However, the present invention is not limited to having the configuration in the above-described embodiment, and may be carried out in any of various embodiments.

Specifically, in the above-described embodiment, the noise absorbing member 3 includes two core members 31. The present invention is not limited to this. It is desired that the number of the core members 31 is any appropriate number in accordance with the desired noise absorption capability.

The wire harness 1 includes the noise absorbing member 3 including two core members 31 outserted over, and secured to, two electric cables 2. The present invention is not limited to this. The number of the electric cables 2 may be any number of one or greater.

For example, the noise absorbing member 3 including two core members 31 may be secured to one electric cable 2. In this case, the lengthy cable tie 5 is secured to the electric cable 2 with the fixing tape acting as the securing portion 4 such that the cable tie 5 is held between the electric cable 2 and the securing portion 4, and the lengthy cable tie 5 is wound around the noise absorbing member 3 as in the above-described embodiment.

In this case, the cable tie 5 is inserted between the electric cable 2 and the securing portion 4, and is wound around the outer circumferential surface of the noise absorbing member 3 in the front-rear direction X. Therefore, the noise absorbing member securing structure 7 may secure the noise absorbing member 3 to the electric cable 2 with a simple configuration.

Furthermore, the cable tie 5 passing between the electric cable 2 and the securing portion 4 is wound around the outer circumferential surface of the noise absorbing member 3. Therefore, the noise absorbing member securing structure 7 allows the entirety of the noise absorbing member 3 in the front-rear direction X to be attached to the securing portion 4 with the cable tie 5. Thus, the noise absorbing member securing structure 7 may secure the noise absorbing member 3 to the electric cable 2 more stably.

In addition, the securing portion 4 is formed of the fixing tape wound around the electric cable 2 at a predetermined position in the electric cable 2 in the front-rear direction X. Therefore, the securing portion 4 may be formed easily, and the weight of the securing portion 4 may be significantly suppressed as compared with the case of a securing portion formed of a metal material or a resin material.

Furthermore, the securing portion 4 is formed of the fixing tape. Therefore, the noise absorbing member securing structure 7 allows the securing portion 4 to be secured to a desired predetermined position in the front-rear direction X with certainty.

In addition, the range in the front-rear direction X in which the fixing tape is to be wound is changed in accordance with the length of the noise absorbing member 3 in the front-rear direction X. In this manner, the noise absorbing member securing structure 7 allows the securing portion 4, having a length in the front-rear direction X suitable to the attachment of the noise absorbing member 3 via the cable tie 5, to be formed.

With this configuration, the noise absorbing member securing structure 7 may secure the noise absorbing member 3 to the electric cable 2 more stably.

In the case where the noise absorbing member 3 is secured to one electric cable 2, the securing portion 4 may be formed of the fixing tape wound such that the length L of the securing portion 4 in the front-rear direction X is (W - t/2) ≤ L ≤ (W + t/2), like in the above-described embodiment.

In the above-described embodiment, the wire harness 1 includes one secured noise absorbing member 3. The present invention is not limited to this. The wire harness 1 may include a plurality of the noise absorbing members 3 secured at a predetermined interval in the front-rear direction X.

In the above-described embodiment, the core members 31 are each formed of a ferrite magnetic body having soft magnetism. The present invention is not limited to this. The core members 31 may be formed of any appropriate material and may have any appropriate configuration as long as the noise electric current flowing in the electric cable 2 or/and the radiation of the electromagnetic noise generated in the electric cable 2 can be suppressed. For example, the core members may each be formed of a wound conductor.

In the above-described embodiment, the securing portion 4 is formed of the fixing tape. The present invention is not limited to this. The securing portion 4 may be formed of a cable tie or a grasping member that integrally grasps two electric cables 2, as long as the securing portion 4 can be secured to the electric cable 2 at least in a state of being restricted from moving in the front-rear direction X.

In the above-described embodiment, the cable tie 5 is used to attach the noise absorbing member 3 to the securing portion 4. The present invention is not limited to this. The attachment portion may have any appropriate configuration as long as the attachment portion is sufficiently lengthy to pass through the gap G defined by the securing portion 4 and the electric cables 2 and to be wound around the noise absorbing member 3.

An engaged member provided on the noise absorbing member 3 may be engaged with an engaging member that bundles the plurality of electric cables 2 and is secured to the plurality of electric cables 2. In this case also, the noise absorbing member 3 may be secured to a desired predetermined position like in the above-described embodiment.

In the above-described embodiment, as one example, the length L of the securing portion 4 in the front-rear direction X is set to a length in the front-rear direction X equal to the length of the noise absorbing member 3 in the front-rear direction X, or the sum of the length W of the noise absorbing member 3 in the front-rear direction X and a tolerance (±t/2). The present invention is not limited to this.

In more detail, the length L of the securing portion 4 in the front-rear direction X may be any appropriate length in the front-rear direction X as long as the noise absorbing member 3 is positionally restricted by the cable tie 5 to a predetermined position in the electric cables 2 in the front-rear direction X. The length L of the securing portion 4 in the front-rear direction X may be, for example, (W - t/2) ≤ L or L ≤ (W + t/2).

In the above-described embodiment, the wire harness 1 includes the braided shield 6 covering the two electric cable 2, to which the noise absorbing member 3 is secured. The present invention is not limited to this. The wire harness 1 does not need to include the braided shield 6.

In the above-described embodiment, the braided shield 6 has an inner diameter generally equal to the outer diameter of the noise absorbing member 3. The present invention is not limited to this. The braided shield 6 may have an inner diameter generally equal to the outer diameter of the assembly of the two electric cables 2. In this case, the braided shield 6 is expanded so as to increase the diameter thereof to cover the noise absorbing member 3, and then the portion of the braided shield 6 covering the electric cables 2 is crushed to decrease the diameter thereof. In this manner, the braided shield 6 is put into close contact with the electric cables 2 and the noise absorbing member 3.

### REFERENCE SIGNS LIST

- 1: wire harness
- 2: electric cable
- 3: noise absorbing member
- 3a: insertion space
- 4: securing portion
- 5: cable tie
- 31: core member
- 51: band portion
- 52: lock portion
- G: gap
- L: length of the securing portion
- W: length of the noise absorbing member
- X: front-rear direction

## Claims

1. A noise absorbing member securing structure securing a ring-shaped noise absorbing member, including an insertion space allowing an electric cable to be inserted therethrough and suppressing noise in the electric cable inserted through the insertion space, to the electric cable, the noise absorbing member securing structure comprising:
a securing portion secured to a predetermined position in the electric cable in a longitudinal direction X; and
an attachment portion attaching the noise absorbing member to the securing portion.

2. The noise absorbing member securing structure according to claim 1, wherein the attachment portion has such a lengthy shape as to pass between the electric cable and the securing portion and to be wound around an outer circumferential surface of the noise absorbing member in the longitudinal direction.

3. The noise absorbing member securing structure according to claim 2, wherein the securing portion is a fixing tape wound around the electric cable at the predetermined position in the electric cable in the longitudinal direction.

4. The noise absorbing member securing structure according to claim 1, wherein:
the securing portion holds a plurality of the electric cables in a bundled state, and
the attachment portion has such a lengthy shape as to pass through a gap defined by the plurality of electric cables and the securing portion and to be wound around an outer circumferential surface of the noise absorbing member.

5. The noise absorbing member securing structure according to claim 4, wherein the attachment portion is a cable tie including a lengthy band-shaped band portion and a lock portion in engagement with, and securing, the band portion wound annularly.

6. The noise absorbing member securing structure according to claim 4, wherein the securing portion is a fixing tape wound around the plurality of electric cables at the predetermined position in the electric cable in the longitudinal direction.

7. The noise absorbing member securing structure according to claim 4, wherein:
the noise absorbing member includes a plurality of ring-shaped bodies located side by side in the longitudinal direction, and
the securing portion has a length in the longitudinal direction that is equal to, or slightly shorter than, that of the noise absorbing member in the longitudinal direction.

8. The noise absorbing member securing structure according to claim 4, wherein:
the noise absorbing member includes a plurality of ring-shaped bodies located side by side in the longitudinal direction, and
the securing portion has a length in the longitudinal direction that is equal to, or slightly longer than, that of the noise absorbing member in the longitudinal direction.

9. The noise absorbing member securing structure according to claim 5, wherein:
the lock portion of the cable tie is located adjacent to an end surface of the noise absorbing member in the longitudinal direction of the electric cable, and
the band portion of the cable tie is inserted through, and secured to, the lock portion on the side of an inner circumferential surface of the noise absorbing member with respect to a base portion of the band portion.

10. The noise absorbing member securing structure according to claim 1, wherein the noise absorbing member includes a plurality of ring-shaped bodies located side by side in the longitudinal direction.

11. A wire harness, comprising:
a plurality of electric cables,
a ring-shaped noise absorbing member including an insertion space allowing the plurality of electric cables to be inserted therethrough and suppressing noise in the electric cables inserted through the insertion space,
a securing portion secured to a predetermined position in the electric cables in a longitudinal direction, and
an attachment portion attaching the noise absorbing member to the securing portion,
wherein the noise absorbing member is secured to the predetermined position in the electric cables in the longitudinal direction by a cooperation of the securing portion and the attachment portion.
